Europäisches Patentamt

European Patent Office

Office européen des brevets

(19)

(11) Numéro de publication : **0 678 480 A1**

# (12) DEMANDE DE BREVET EUROPEEN

(21) Numéro de dépôt : **95470010.0**

(22) Date de dépôt : **14.03.95**

(51) Int. Cl.⁶ : **C02F 3/00,** C05F 3/00, C05F 17/00

(30) Priorité : **18.04.94 FR 9404842**

(43) Date de publication de la demande :
**25.10.95 Bulletin 95/43**

(84) Etats contractants désignés :
**BE DE ES GB IT NL PT**

(71) Demandeur : **SARL SOCOAG (Société à Responsabilité Limitée)**
**Jully La Loge**
**F-89160 Ancy Le Franc (FR)**

(72) Inventeur : **Kabore, Paul**
**5 allée Roncelin**
**F-89000 Auxerre (FR)**

(74) Mandataire : **Poupon, Michel**
**B.P. 421**
**3, rue Ferdinand Brunot**
**F-88011 Epinal Cédex (FR)**

(54) **Procédé et installation pour le traitement biologique de déjections de toute nature.**

(57)    Le procédé de traitement biologique selon l'invention peut s'appliquer à des déjections de toute nature, lisier de porc, déjection de lapin ou autre animal, boues de stations d'épuration etc... et il se caractérise en ce qu'il comporte :
— une étape de digestion contrôlée dans un digesteur (1) qui reçoit par pompage le produit à traiter,
— une étape de contrôle automatique de la fermentation dans le digesteur par dosage et contrôle de micro-organismes sélectionnés et envoyés dans le digesteur, et contrôle continu des autres paramètres de la fermentation,
— une étape de mélange du produit obtenu par cette digestion contrôlée avec au moins un produit absorbant choisi dans le groupe (débris végétaux, polymère) pour obtenir un produit solide.
En outre après assèchement on obtient un produit sec et totalement désodorisé et compactable.

FIG.1

EP 0 678 480 A1

La présente invention concerne un procédé et une installation pour le traitement par exemple des boues des stations d'épuration, et des boues et déjections en général.

On connait déjà différents procédés de traitement de déjections.

Par exemple le procédé de la demande de brevet EP-445.102 qui consiste en une fermentation naturelle de déchets organiques sous forme liquide.

Après recyclage partiel du liquide stabilisé et son brassage avec de nouveaux déchets organiques, on sépare le mélange en une phase liquide et une phase solide.

La fermentation est naturelle et la composition chimique des phases obtenues n'est pas modifiable. En outre la phase liquide est un handicap pour la protection de l'environnement de l'installation.

Le procédé décrit dans le brevet EP-360.945 neutralise les odeurs de lisier de porc grâce à l'utilisation d'un support carboné et d'un ensemencement spécifique.

Ce procédé présente également des inconvénients comme par exemple la nécessité d'une oxygénation et d'un séchage en lit fluidisé.

En outre, chacun des procédés connus est conçu pour traiter un seul type de produit et ne permet d'obtenir qu'une composition prédéterminée des sous-produits et produits finaux.

Un premier but de l'invention est de pallier les inconvénients des installations antérieures.

Un autre but de l'invention est de réaliser un traitement modulable c'est à dire un contrôle total du traitement de façon à adapter ledit traitement d'une part à la nature du matériau à traiter et d'autre part à la composition souhaitée des sous-produits ou produits terminaux.

Les principaux objectifs à atteindre sont :
- absence de pollution,
- élimination des odeurs,
- valorisation industrielle des sous-produits et produits terminaux,
- réalisation d'une installation efficace, modulaire et peu onéreuse,
- traitement adaptable à la nature du produit à traiter : lisier de porc, déjection de tout animal, boue d'épuration.

Le ciblage des sous-produits et produits terminaux doit se faire en fonction de différentes contraintes :
- sanitaires (absence de micro-organismes nuisibles ou nocifs, de mauvaises odeurs...),
- écologiques (absence de pollution...),
- environnementales (absence de défiguration du paysage...),
- économiques (par valorisation agronomique, industrielle...), obtention de produits commercialisables.

Tous ces buts et objectifs sont atteints par le procédé selon l'invention qui peut s'appliquer à des déjections de toute nature, lisier de porc, déjections de lapin ou autre animal, boues de stations d'épuration, etc... et qui se caractérise en ce qu'il comporte :
- une étape de digestion contrôlée dans un digesteur (1) qui reçoit par pompage le produit à traiter,
- une étape de contrôle automatique de la fermentation dans le digesteur par dosage et contrôle de micro-organismes sélectionnés envoyés dans le digesteur, et contrôle continu des autres paramètres de la fermentation,
- une étape de mélange du produit obtenu par cette digestion contrôlée avec au moins un produit absorbant choisi dans le groupe (débris végétaux, polymère) pour obtenir un produit solide.

En outre, après assèchement du produit obtenu on obtient un produit totalement désodorisé qui peut facilement être compacté en vue de faciliter le transport et la commercialisation.

On comprendra mieux l'invention à l'aide de la description qui suit faite en référence aux figures annexées suivantes :
- **figure 1** : schéma de principe d'une installation de mise en oeuvre du procédé selon l'invention,
- **figure 2** : schéma d'un bloc I d'une installation modulaire,
- **figure 3** : schéma d'un autre bloc ou bloc II d'une installation modulaire,
- **figure 4** : vue éclatée d'un compacteur-extrudeur utilisé dans l'installation.

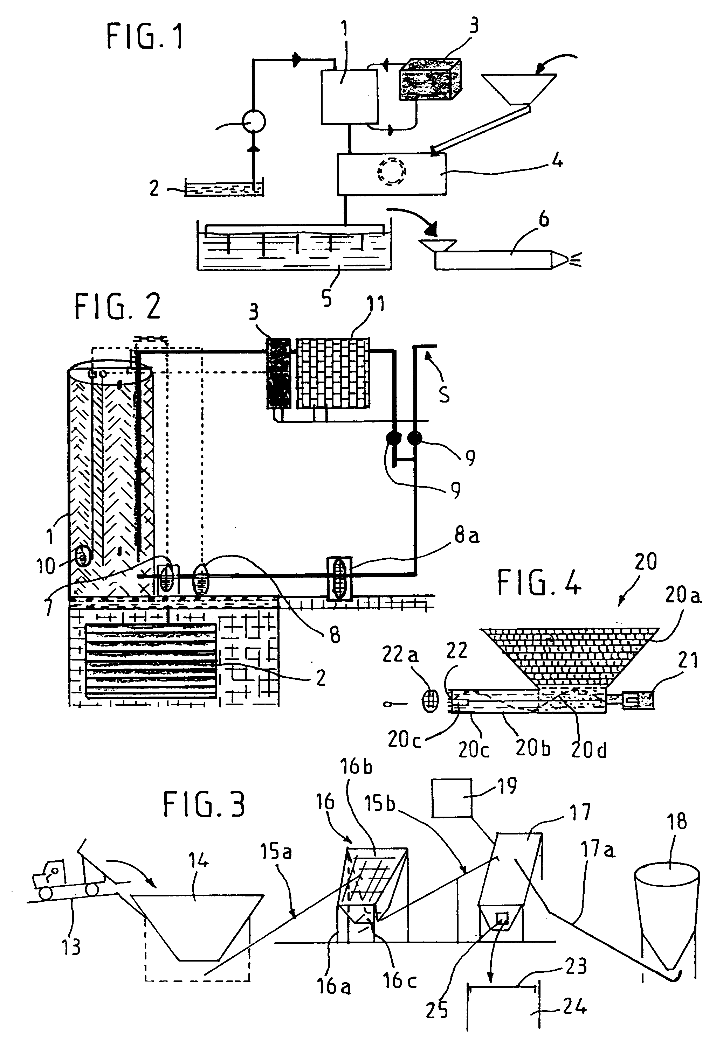

La figure 1 est un schéma de principe d'une installation selon l'invention et permet d'illustrer le procédé de traitement conforme à l'invention et qui comporte principalement :

1) Une étape de digestion contrôlée dans un digesteur (1) qui reçoit par pompage le lisier d'une fosse à lisier (2). La fermentation ou digestion est déclenchée au préalable dans la fosse (2) et entretenue par ensemencement par micro-organismes soigneusement sélectionnés et dosés de manière à liquéfier le lisier et à le rendre homogène. Une arrivée d'air sous pression accélère l'oxygénation du mélange et réduit la durée du séjour dans le digesteur.

Dans le cas où l'installation ne comporterait pas de fosse, la fermentation serait déclenchée directement dans le digesteur.

2) Une étape de contrôle automatique réalisée dans un automate doseur (3) qui fournit les différents micro-organismes actifs en fonction des mesures de paramètres effectuées en continu dans le digesteur pendant la réaction. Ces paramètres sont notamment :
- oxygénation par exemple 2 à 4 ppm d'oxygène,
- 0.71 TAC,
- entre 15 et 37° (optimum vers 35°),
- pH compris entre 6 et 8,2 (optimum entre 7,2 et 8,2),
- métaux lourds < 1 mg/l,
- présence de phosphore.

Les micro-organismes sont sélectionnés en fonction de la nature du lisier à traiter et de la composition finale qu'on souhaite obtenir.

L'aptitude à la dégradation de fibres de matières organiques (biomasse reconstituée) ressort des observations suivantes :
- chaque biomasse est essentiellement constituée de matières organiques, d'hydrocarbones et plus particulièrement de lignine de cellulose et d'hémicellulose,... l'ensemble pouvant être combiné à partir de déjections animales et de débris végétaux.
- chaque biomasse forme un ensemble à composter dit de compostage de déjections animales ou de débris végétaux ou de déjections animales et de débris végétaux définissant un résidu organique aboutissant après une fermentation "spécifiée ou une double fermentation" spécifiée et successive à des matières humiques stabilisées de molécules organiques simplifiées et d'acides humiques pouvant conduire à l'élaboration d'un engrais biologique du type 5 - 10 - 10 ou autres dont la formule est maitrisable à volonté.

L'amélioration du compostage repose sur les observations suivantes :
- l'amélioration n'est pas uniquement une notion de vitesse, mais aussi de rendement organique global.

Par exemple, l'effet de fertilisation du sol par les produits obtenus par le procédé peut être résumé dans le tableau ci-après :

| Paramètre | 6 semaines | 100 jours |
|---|---|---|
| M.O. | c | c |
| N | b - c | c |
| C/N | c | c |
| MO - PC | a | a - b |
| $\frac{C + H}{L}$ | c | a |
| CELLULOSE | c | a |
| HEMICELLULOSE | b - c | a |
| LIGNINE | c | c |
| POIDS NET | a - c | |

a : évolution du paramètre dans le temps $>$ ã 98 %

a - b : évolution du paramètre dans le temps $>$ ã 95 %

b - c : évolution du paramètre dans le temps $>$ ã 92 %

c : évolution du paramètre dans le temps $>$ ã 90 %

**Légende du tableau :**

M.O.            : Matières Organiques (perte au feu par calcination) : sur le sec.

N               : Azote Total (Kjeldhal) : exprimé en % sur le sec.

C/N            : Rapport Carbone sur Azote.

MO-PC          : Matières Organiques - Parois Cellulaires, qui représente la fraction (acides aminés, lipides, acides gras, peptides...).

$\dfrac{C+H}{L}$          : Rapport (Cellulose + Hémicellulose) sur Lignine.

CELLULOSE      : Cellulose (VAN SOEST) ; en % du sec.

HEMICELLULOSE : Hémicellulose ; en % du sec.

LIGNINE        : Lignine ; en % du sec.

- l'amélioration est basée sur une pression de sélection et de mutation réversible sans danger sur l'environnement, donnant lieu à une combinaison de souches de bactéries naturelles permettant de répondre à la possibilité de dégradation la plus rapide possible du substrat défini et de produire sans blocage, une grande quantité d'enzymes spécifiques nécessaires à la seule exception près que nous ne sélectionnons pas pour nos activités et à dessin de bactéries comprenant Serrathia et Kloebsiela, si elles s'y retrouvaient ce ne pourrait être dû que par le hasard et la nature.

Les souches bactériennes sont choisies en fonction des critères suivants :
- aspects synergétiques,
- production d'enzymes (type : lipase, cellulase, amylase,...),
- aptitude à stabiliser un milieu,
- non pathogène,
- sans danger pour l'environnement,
- combinaisons viables entre bactéries aérobies et anaérobies capables pour certaines d'opérer l'oxydoréduction et d'assurer le fonctionnement de la nitrification et de la dénitrification, de décomposer (grâce aux enzymes élaborés) les composants grossiers en plus simples éléments nutritionnels,
- nutriments et milieu à coloniser.

A titre d'exemples non limitatifs, on utilise les types de mélanges de souches synergétiques opérationnelles suivants :
- souches de bactéries nitrifiantes qui éliminent l'amoniaque : Nitrosomonas et Nitrobacter,
- souches de bactéries dénitrifiantes biodégradantes : bacillus biotréniformes (production de lipase et de cellulose), bacillus substilus (production d'amylase), bacillus polymixa (production de protéase liquéfaction des déchets organiques), pseudomonas aeruginosa (dégradation des graisses animales et végétales), pseudomonae stutgeri (réduction des hydrocarbures), pseudomonas fluorescens (dégradation des surfaçants), eschérichia hermanil (dégradation de la cellulose et réaction des sulfides), actinomyles.

3) Une étape de mélange avec des produits carbonés.

En sortie de digesteur, le produit est liquide et au moins en partie désodorisé voire totalement désodorisé.

Ce produit est mélangé à des particules de débris végétaux préalablement triés et déterminés par l'automate doseur (3) en fonction de la nature du produit traité. Ces débris végétaux sont par exemple choisis dans l'ensemble (litière biomaitrisée, paille d'orge broyée, papier broyé, copeaux de sapin, écorces, paille de bois broyée, carton broyé). On peut à ces débris végétaux, ajouter un polymère pour augmenter le caractère absorbant.

En option, on peut prévoir une adjonction de chaux ou de soude dans le mélangeur pour modifier le pH.

4) Une étape d'auto-assèchement.

Le mélange sortant du mélangeur (4) est expédié sans chauffage dans un bassin de stockage (5) où il termine durant 2 à 3 mois sa transformation à savoir :
- absorption de l'eau par la cellulose des débris végétaux,
- digestion complète des matières fécales,
- évaporation stimulée par le dégagement de chaleur de la réaction exothermique. Cette phase fait évoluer la température qui peut atteindre 70 à 80° et éliminer les micro-organismes nocifs. Seuls les micro-organismes utiles ont été conservés avec une matière organique conséquente, ce qui est indispensable dans le produit final pour une bonne valorisation du sol.

Le résidu solide obtenu en sortie du mélangeur a l'aspect d'un compost et il est totalement désodorisé.

5) Une étape de compactage.

Le résidu solide obtenu en fin d'étape précédente est par exemple compacté par extrudeur (6) en granulés prêt à la commercialisation.

Une installation pour la mise en oeuvre du procédé est représentée sur les figures 2 et 3.

Elle peut être modulable et calculée pour traiter chaque jour la production journalière de déjections d'animaux et comporter plusieurs blocs distincts qui comportent non limitativement les éléments suivants :

Bloc I (figure 2) :
- une fosse à lisier (2),
- une pompe d'extraction (7) vers un digesteur (1),
- un compresseur à air (8),
- un moteur d'extraction et recyclage du lisier (8a),
- un fermenteur ou digesteur (1),
- deux vannes (9) par exemple mécaniques ou pneumatiques et une pompe de recyclage (10),
- un automate de gestion (3) (ou automate doseur) pour la gestion de toutes les opérations des blocs I et II,
- un tableau de commande général (11),
- une sortie (S) vers le mélangeur.

Le fonctionnement de ce bloc est entièrement automatique.

Ce bloc peut comporter encore des éléments fonctionnels à la portée de l'homme du métier.

Bloc II (figure 3) :
- une plate-forme de réception (13) et une trémie de réception (14) de matériaux hydrocarbonés de type cellulosique, cette trémie est de préférence semi-enterrée,
- deux convoyeurs (15a, 15b),
- un trieur (16), ce trieur est posé sur quatre pieds (16a) et recouvert par une grille (16b) à travers laquelle tombent les éléments apportés par un convoyeur (15a) et venant de la trémie (14). Le produit trié tombe à travers une trappe (16c) et tombe sur le convoyeur de reprise (15b) vers un mélangeur (17).
- un mélangeur (17) avec si nécessaire une vis de reprise (17a) vers un silo (18),
- un silo (18) d'absorbants à base végétale et de polymère dont la fonction est l'élimination des odeurs et la contribution au compostage à partir du lisier ou autre déjections ou boues,
- un conteneur de matériaux basiques (19),
- un quai de séchage (24) de compost pour poursuivre l'activité fermentaire et micro-organique par un drainage.

Ce quai est étanche et abrité par un abri (23). Il est possible de contrôler l'humidité (évaporation évacuée, aspiration, circulation d'air sec...) par tout moyen approprié. Le produit à sécher tombe par une trappe (25) du mélangeur sur le quai (24). Le produit est lentement retourné et aéré , par une machine de type connu (endaineuse), pour favoriser l'auto-assèchement.

Bloc III (figure 4) :
- un extrudeur (20), comme par exemple celui de la figure 4. L'extrudeur (20) est formé d'une trémie (20a) où tombe le compost séché et coiffant un fourreau (20b) avec quatre barrettes internes (20c) dans lequel tourne une vis d'Archimède (20d) entraînée par un moteur (21). Un couteau (22) fixé en bout de la vis (20d) racle une grille (22a) pour obliger les bouchons à sortir.

Bloc IV (non représenté) :
- séchoir biologique.

Bloc V (non représenté) :
- conditionnement et stockage de produit fini.

Les avantages de l'invention sont nombreux et notamment :
- liquéfaction dans la fosse par ensemencement de micro-organismes sélectionnés entraînant la dégradation des masses solides, et rendant le lisier homogène pour permettre le pompage,
- traitement au jour le jour de la totalité de la production quotidienne de déjections ou boues,
- installation modulaire par source d'économie et d'efficacité (chaque bloc est accessible individuellement, et le module de base permet de traiter 5 à 6000 m3 par an),
- sécurité par suppression des grandes fosses qui sont dangereuses et onéreuses,
- désodorisation totale et irréversible des produits secs,
- dépollution et absence de risque pour les nappes phréatiques,
- assainissement du produit final séché sans apport d'énergie par l'exothermie de la réaction,
- facilité de transport et simplicité de la technique.

Dans toute la description et les revendications, le terme de fosse est compris au sens général de moyen de stockage tel que cuve, préfosse, fosse, etc...

## Revendications

**1.** Procédé pour le traitement biologique des déjections, boues des stations d'épuration ou autres, caractérisé en ce qu'il comporte :
- une étape de digestion contrôlée dans un digesteur (1) qui reçoit par pompage le produit à traiter,
- une étape de contrôle automatique de la fermentation dans le digesteur par dosage et contrôle de micro-organismes sélectionnés et envoyés dans le digesteur, et contrôle continu des autres paramètres de la fermentation,
- une étape de mélange du produit obtenu par cette digestion contrôlée avec au moins un produit absorbant choisi dans le groupe (débris végétaux, polymère) pour obtenir un produit solide.

**2.** Procédé selon la revendication 1, caractérisé en ce que l'étape de digestion contrôlée est précédée d'un ensemencement des micro-organismes sélectionnés dans une fosse (2) de manière à liquéfier le produit à traiter.

**3.** Procédé selon l'une des revendications 1 à 2, caractérisé en ce que les micro-organismes sont choisis dans des souches de bactéries nitrifiantes et dénitrifiantes.

**4.** Procédé selon l'une au moins des revendications 1 à 3, caractérisé en ce que les produits végétaux sont choisis dans l'ensemble (litière biomaîtrisée, paille d'orge broyée, papier broyé, copeaux de sapin, écorces, paille de bois broyée, carton broyé).

**5.** Procédé selon l'une au moins des revendications précédentes, caractérisé en ce qu'il comporte en outre un apport en matière basique.

**6.** Procédé selon l'une au moins des revendications précédentes, caractérisé en ce qu'il comporte en outre une étape d'auto-assèchement pour l'absorption de l'eau et digestion complète grâce à une réaction exothermique.

**7.** Procédé selon l'une au moins des revendications précédentes, caractérisé en ce qu'il comporte en outre une étape de compactage.

**8.** Installation pour le traitement des déjections et de boues organiques, caractérisée en ce qu'elle est conçue pour la mise en oeuvre du procédé selon l'une au moins des revendications 1 à 7.

**9** Installation selon la revendication 8, caractérisée en ce qu'elle est modulaire et comporte notamment un bloc I comportant une fosse (2), une pompe d'extraction (7) vers un digesteur (1), un compresseur à air (8), deux vannes (9) et une pompe de recyclage (10), un automate de gestion (3), un tableau de commande (11), un bloc II avec une plate-forme de réception (13) et une trémie (14), deux convoyeurs (15a, 15b), un trieur (16), un mélangeur (17), un silo (18), un conteneur de matériaux basiques (19), un quai de séchage (24), un bloc III formé d'un extrudeur.

FIG. 1

FIG. 2

FIG. 4

FIG. 3

**Office européen des brevets**

# RAPPORT DE RECHERCHE EUROPEENNE

Numero de la demande

EP 95 47 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | FR,A,2 331 522 (KAELIN J.R.)<br>* revendications *<br>* page 1, colonne 21 - page 7, colonne 22 *<br>--- | 1-4,6,8 | C02F3/00<br>C05F3/00<br>C05F17/00 |
| Y<br>A | EP,A,0 509 609 (ECOTECHNIEK B.V.)<br>* revendications 1,4,7-12 *<br>* exemple *<br>--- | 1-4,6,8<br>5,9 | |
| A | EP,A,0 542 634 (SLIR, S.L.)<br>* revendications 1-7 *<br>* colonne 4, ligne 2 - colonne 6, ligne 53 *<br>--- | 1-6,8,9 | |
| A | FR,A,2 426 662 (ALFA LAVAL STALLTECHNIK G.M.B.H.)<br>* le document en entier *<br>----- | 1,3,8,9 | |
| | | | **DOMAINES TECHNIQUES RECHERCHES (Int.Cl.6)**<br><br>C05F<br>C02F |

Le présent rapport a été établi pour toutes les revendications

| Lieu de la recherche | Date d'achèvement de la recherche | Examinateur |
|---|---|---|
| LA HAYE | 21 Juin 1995 | RODRIGUEZ FONTAO, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)